# EUROPEAN PATENT APPLICATION

(11) **EP 4 604 416 A1**
(43) Date of publication of application: **20.08.2025**
(21) Application number: 23881649.0
(22) Date of filing: 12.10.2023
(51) Int. Cl.: H04B 7/185

(54) **COMMUNICATION CONTROL METHOD AND DEVICE**

(30) Priority: 27.10.2022 CN 202211330221
(71) Applicant: Huawei Technologies Co., Ltd., Shenzhen, Guangdong 518129 (CN)
(72) Inventor: JIN, Tao, Shenzhen, Guangdong 518129 (CN); LI, Xianchi, Shenzhen, Guangdong 518129 (CN); FU, Xia, Shenzhen, Guangdong 518129 (CN); YANG, Bing, Shenzhen, Guangdong 518129 (CN)
(74) Representative: Maiwald GmbH
(86) International application number: PCT/CN2023/124203
(87) International publication number: WO 2024/088070

(57) **Abstract**

This application discloses a communication control method and a device, to reduce interference between signals of different satellites and improve spectrum utilization of satellite communication. The method includes: obtaining ephemeris information of a plurality of satellites; predicting, based on the ephemeris information, a target time interval in which coverage areas of the satellites overlap; and adjusting a transmission resource of a satellite in the target time interval, to reduce communication interference between different satellites, so as to improve utilization of the transmission resource by the satellite.

## Description

This application claims priority to Chinese Patent Application No. 202211330221.6, filed with the China National Intellectual Property Administration on October 27, 2022 and entitled "COMMUNICATION CONTROL METHOD AND DEVICE", which is incorporated herein by reference in its entirety.

### TECHNICAL FIELD

This application relates to the field of communication technologies, and in particular, to a communication control method and a device.

### BACKGROUND

Compared with a terrestrial mobile communication system, a satellite mobile communication system has significant advantages of wide coverage and not being restricted by terrain conditions. In addition, to provide service quality similar to that of the terrestrial mobile communication system, the satellite mobile communication system needs to have carrier-class reliability.

Low-orbit and medium-orbit satellites usually use inclined orbits. When an orbit inclination angle is not 90° (that is, a non-polar orbit is used), an ascending-orbit satellite and a descending-orbit satellite may cross. When the ascending-orbit satellite and the descending-orbit satellite approach each other, an overlapping area occurs in coverage areas of beams of the two satellites. Interference occurs when different satellites communicate with a terminal in the overlapping area. As a result, signal quality of satellite communication is reduced.

### SUMMARY

This application provides a communication control method and a device, to reduce interference between signals of different satellites, and improve signal quality of satellite communication.

According to a first aspect, this application provides a communication control method, including: A control node obtains ephemeris information of a plurality of satellites; the control node predicts overlapping information based on the ephemeris information, where the overlapping information indicates that a coverage area of a first beam of a first satellite and a coverage area of a second beam of a second satellite are to overlap in a target time interval, and the first satellite and the second satellite are different satellites in the plurality of satellites; and the control node sends a target control signal to a target satellite based on the overlapping information, where the target control signal indicates the target satellite to adjust a target transmission resource used by the target satellite to transmit data in the target time interval, to reduce interference between a signal (referred to as a first signal) used by the first satellite to transmit data in the target time interval and a signal (referred to as a second signal) used by the second satellite to transmit data in the target time interval. The target satellite includes the first satellite and/or the second satellite.

Because the target satellite only needs to adjust the target transmission resource in the target time interval based on the control signal, interference between the first signal and the second signal can be reduced or even avoided. Therefore, in a time interval other than the target time interval, both the first satellite and the second satellite can fully use the transmission resource to transmit data, which helps improve utilization of the transmission resource by the first satellite and the second satellite.

Optionally, the target transmission resource includes a target coverage area of a target beam in the target time interval, and/or a target time resource used by the target beam in the target time interval, and/or a target frequency resource used by the target beam in the target time interval, and the target beam is a beam of the target satellite. Adjusting a plurality of types of transmission resources helps further reduce or even avoid co-channel interference.

Optionally, the overlapping information further indicates a location of an overlapping area in the target coverage area, and the overlapping area is an overlapping area between the coverage area of the first beam and the coverage area of the second beam in the target time interval.

Optionally, the target control signal indicates the target satellite to adjust the target coverage area, to reduce or remove the overlapping area. In this way, interference between the first signal and the second signal can be reduced without reducing a frequency resource available to a single satellite, and utilization of the frequency resource by the satellite can be improved.

Optionally, the target control signal indicates the target satellite to adjust an order in which the target satellite schedules the target frequency resource, so that an order in which the first satellite schedules the frequency resource of the first satellite in the target time interval is different from an order in which the second satellite schedules the frequency resource of the second satellite in the target time interval. This helps prevent the first satellite and the second satellite from using a same frequency or frequency band to transmit data in the target time interval. In this way, interference between the first signal and the second signal can be reduced without reducing a frequency resource available to a single satellite, and utilization of the frequency resource by the satellite can be improved.

According to a second aspect, this application provides a communication control method, including: A first satellite obtains ephemeris information of at least one satellite; the first satellite predicts overlapping information based on ephemeris information of the first satellite and the obtained ephemeris information, where the overlapping information indicates that a coverage area of a first beam of the first satellite and a coverage area of a second beam of the first satellite are to overlap in a target time interval, and the second beam is a beam of a second satellite of the at least one satellite; and the first satellite adjusts, based on the overlapping information, the first transmission resource used by the first satellite to transmit data in the target time interval.

Optionally, the first transmission resource includes a first coverage area of the first beam in the target time interval, and/or a first time resource used by the first beam in the target time interval, and/or a first frequency resource used by the first beam in the target time interval.

Optionally, the overlapping information further indicates a location of an overlapping area in the first coverage area, and the overlapping area is an overlapping area between the coverage area of the first beam and the coverage area of the second beam in the target time interval.

Optionally, that the first satellite adjusts, based on the overlapping information, a target transmission resource used by the first satellite to transmit data in the target time interval includes: The first satellite adjusts the first coverage area, to reduce or remove the overlapping area.

Optionally, that the first satellite adjusts, based on the overlapping information, a target transmission resource used by the first satellite to transmit data in the target time interval includes: the first satellite adjusts an order of scheduling the first frequency resource, where an adjusted order is different from an order in which the second satellite schedules a frequency resource of the second satellite.

According to a third aspect, this application provides a control apparatus, where the control apparatus includes: an obtaining module, configured to obtain ephemeris information of a plurality of satellites; a determining module, configured to predict overlapping information based on the ephemeris information, where the overlapping information indicates that a coverage area of a first beam of a first satellite and a coverage area of a second beam of a second satellite are to overlap in a target time interval, and the first satellite and the second satellite are different satellites in the plurality of satellites; and a sending module, configured to send a target control signal to a target satellite based on the overlapping information, where the target control signal indicates the target satellite to adjust a target transmission resource used by the target satellite to transmit data in the target time interval, and the target satellite includes the first satellite and/or the second satellite.

Optionally, the target transmission resource includes a target coverage area of a target beam in the target time interval, and/or a target time resource used by the target beam in the target time interval, and/or a target frequency resource used by the target beam in the target time interval, and the target beam is a beam of the target satellite.

Optionally, the overlapping information further indicates a location of an overlapping area in the target coverage area, and the overlapping area is an overlapping area between the coverage area of the first beam and the coverage area of the second beam in the target time interval.

Optionally, the target control signal indicates the target satellite to adjust the target coverage area, to reduce or remove the overlapping area.

Optionally, the target control signal indicates the target satellite to adjust an order of scheduling the target frequency resource, so that in the target time interval, an order in which the first satellite schedules the frequency resource of the first satellite is different from an order in which the second satellite schedules the frequency resource of the second satellite.

According to a fourth aspect, this application provides a communication apparatus. The communication apparatus may be a satellite or may be deployed on a satellite. The communication apparatus may include: an obtaining module, configured to obtain ephemeris information of at least one satellite; a prediction module, configured to predict overlapping information based on ephemeris information of the satellite and the obtained ephemeris information, where the overlapping information indicates that a coverage area of a first beam of the first satellite and a coverage area of a second beam are to overlap in a target time interval, and the second beam is a beam of a second satellite of the at least one satellite; and an adjustment module, configured to adjust, based on the overlapping information, a first transmission resource used by the satellite to transmit data in the target time interval.

Optionally, the first transmission resource includes a first coverage area of the first beam in the target time interval, and/or a first time resource used by the first beam in the target time interval, and/or a first frequency resource used by the first beam in the target time interval.

Optionally, the overlapping information further indicates a location of an overlapping area in the first coverage area, and the overlapping area is an overlapping area between the coverage area of the first beam and the coverage area of the second beam in the target time interval.

Optionally, the adjustment module is specifically configured to adjust the first coverage area, to reduce or remove the overlapping area.

Optionally, the first satellite is specifically configured to adjust an order of scheduling the first frequency resource, where an adjusted order is different from an order in which the second satellite schedules a frequency resource of the second satellite.

According to a fifth aspect, a computing device is provided, including a memory and a processor, where the memory stores code, the processor is configured to execute the code, and when the code is executed, the computing device performs the method according to the first aspect or any one of the possible implementations of the first aspect, or performs the method according to the second aspect or any one of the possible implementations of the second aspect.

According to a sixth aspect, a computer storage medium is provided, where the computer storage medium stores a computer program, and when the program is executed by a computer, the computer is enabled to perform the method according to the first aspect or any one of the possible implementations of the first aspect, or perform the method according to the second aspect or any one of the possible implementations of the second aspect.

According to a seventh aspect, a computer program product is provided, where the computer program product stores instructions, and when the instructions are executed by a computer, the computer is enabled to perform the method according to the first aspect or any one of the possible implementations of the first aspect, or perform the method according to the second aspect or any one of the possible implementations of the second aspect.

The apparatuses provided in this application may be configured to perform the foregoing corresponding methods. Therefore, for technical effects that can be achieved by the apparatuses in this application, refer to the technical effects achieved by the foregoing corresponding methods. Details are not described herein again.

### BRIEF DESCRIPTION OF DRAWINGS

FIG. 1 shows a structure of a communication system to which this application is applicable;
FIG. 2 shows coverage areas of beams of a satellite 1 and a satellite 2;
FIG. 3 shows orbits of a satellite 1 and a satellite 2;
FIG. 4-1 shows a possible procedure of a communication control method according to this application;
FIG. 4-2 and FIG. 4-3 each show an adjusted target coverage area;
FIG. 5 shows another possible procedure of a communication control method according to this application;
FIG. 6 shows a possible structure of a control apparatus according to this application;
FIG. 7 shows a possible structure of a communication apparatus according to this application; and
FIG. 8 shows a possible result of a computing device according to this application.

### DESCRIPTION OF EMBODIMENTS

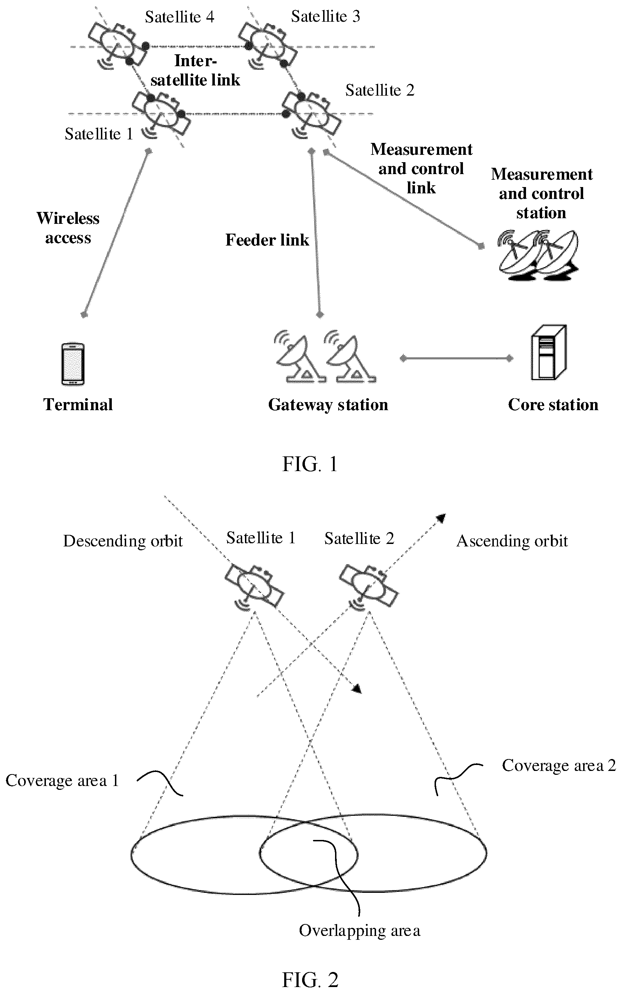

FIG. 1 shows a communication system. Refer to FIG. 1. The communication system includes a satellite and a terminal. The communication system may include a plurality of satellites. In FIG. 1, four satellites are used as an example. The communication system may include more or fewer satellites. Different satellites may exchange information or transmit data through an inter-satellite link. The communication system may include one or more terminals. In FIG. 1, one terminal is used as an example. The satellite is configured to provide a communication service for the terminal. For brevity of a picture, FIG. 1 merely shows a connection between a satellite 1 and the terminal. According to a definition in the 3rd generation partnership project (3rd generation partnership project, 3GPP), a satellite can support two working modes: transparent transmission and regeneration. In the transparent transmission mode, a wireless access point is deployed on a ground. In the regeneration mode, a wireless access point is deployed on a satellite.

Optionally, the communication system shown in FIG. 1 may further include a gateway station and a core network. The gateway station is also referred to as a signal gateway station, and is used for transfer between the core network and a satellite communication network. In the transparent transmission mode described above, the wireless access point may be deployed at the gateway station. In this application, a link between the satellite and the gateway station is referred to as a feeder link. For brevity of the picture, FIG. 1 merely shows a feeder link between a satellite 2 and the gateway station.

Optionally, the communication system shown in FIG. 1 may further include a measurement and control station. "Measurement" includes measurement and telemetry of a flight track of a satellite, and "control" includes remote control of the satellite. Main tasks of the measurement and control station include: tracking, orbit measurement, and attitude measurement of a satellite, and remote control of an orbit and an attitude, to ensure that the satellite operates in a normal attitude and a predetermined orbit; and telemetry and remote control of the satellite and a payload and various instruments of the satellite, to help the satellite complete a specified operation and implement a specified function. In this application, a link between the satellite and the measurement and control station is referred to as a measurement and control link. Similarly, for brevity of the picture, FIG. 1 merely shows a measurement and control link between the satellite 2 and the measurement and control station.

A satellite performs, through a beam, data transmission with a terminal in a coverage area of the beam. For example, the satellite sends, through a transmit beam, data to a terminal in a coverage area of the transmit beam. For example, the satellite receives, through a receive beam, data from a terminal in a coverage area of the receive beam. The beam mentioned below may be a transmit beam or a receive beam.

FIG. 2 shows a coverage area (referred to as a coverage area 1) of a beam (referred to as a beam 1) of the satellite 1 and a coverage area (referred to as a coverage area 2) of a beam (referred to as a beam 2) of the satellite 2. The coverage area of the beam mentioned in this application may be an area in a two-dimensional plane (for example, an area inside a circle shown in FIG. 2), or may be an area in three-dimensional space (for example, an area inside a cone shown in FIG. 2). Data may be transmitted between the satellite 1 and a terminal located in the coverage area 1 by receiving a signal or transmitting a signal (referred to as a signal 1), and data may be transmitted between the satellite 1 and a terminal located in the coverage area 2 by receiving a signal or transmitting a signal (referred to as a signal 2).

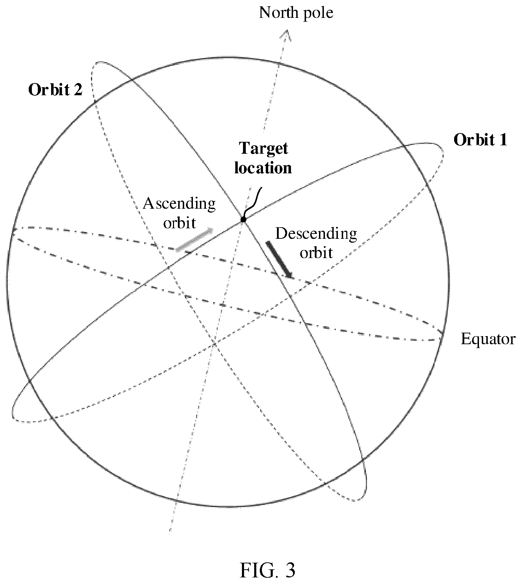

Optionally, the satellite may be a low-orbit satellite or a medium-orbit satellite. FIG. 3 shows an orbit 1 in which a satellite 1 orbits the Earth and an orbit 2 in which the satellite 2 orbits the Earth. In FIG. 3, a dotted line is used to represent an orbit on a back of the Earth, and a solid line is used to represent an orbit on a front of the Earth. Refer to FIG. 3. Both the orbit 1 and the orbit 2 are inclined orbits. The inclined orbit refers to an orbit in which an included angle between an orbit plane of a satellite and an equator plane is not 0°. In FIG. 3, a direction of a satellite in an orbit is shown by using an arrow. In this application, a part that is of an orbit of a satellite and that is from south to north is referred to as an ascending orbit, and a part that is of the orbit of the satellite and that is from north to south is referred to as a descending orbit or a descending orbit. Refer to FIG. 3. The satellite 1 operating in an ascending orbit and the satellite 2 operating in a descending orbit may be close to each other at a target location. In this case, the coverage area 1 and the coverage area 2 may overlap. For example, an overlapping area is shown in FIG. 2. The overlapping area may be an area on a two-dimensional plane, or may be an area in three-dimensional space.

In this application, a time interval in which the two coverage areas overlap is referred to as a target time interval. In the target time interval, the satellite 1 may transmit data with a terminal located in the overlapping area through the signal 1, and the satellite 2 may transmit data with the terminal located in the overlapping area through the signal 2. Co-channel interference may occur between the signal 1 and the signal 2.

In this application, a satellite operating in an ascending orbit is referred to as an ascending-orbit satellite, and a satellite operating in a descending orbit is referred to as a descending-orbit satellite. To avoid co-channel interference between the signal 1 and the signal 2, in a possible implementation, the ascending-orbit satellite and the descending-orbit satellite may separately schedule half of a spectrum resource, to reduce co-channel interference. For example, a spectrum resource scheduled by the ascending-orbit satellite is (0, 50] MHz, and a spectrum resource scheduled by the descending-orbit satellite is (50,100] MHz. In this way, when the satellite 1 is close to the satellite 2, because a spectrum range used by the satellite 1 to transmit the signal 1 is different from a spectrum range used by the satellite 2 to transmit the signal 2, interference between the signal 1 and the signal 2 can be reduced. However, because a single satellite can schedule a maximum of half of the spectrum resource at any time point, utilization of the spectrum resource by a single satellite is greatly reduced.

To improve utilization of a transmission resource by a satellite, this application proposes to predict, based on ephemeris information of satellites, a target time interval in which coverage areas of the satellites overlap, and adjust a transmission resource of a satellite in the target time interval, to reduce communication interference between different satellites.

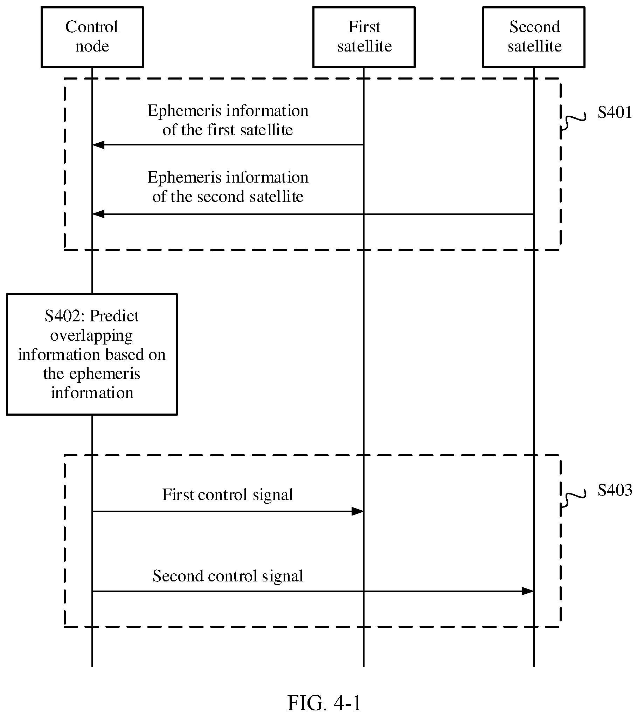

FIG. 4-1 shows a possible procedure of a communication control method according to this application. Optionally, the method may be applied to the communication system shown in FIG. 1. Refer to FIG. 4-1. The method includes S401 to S403.

S401: A control node obtains ephemeris information of a plurality of satellites.

The control node is a device other than a satellite. A specific type of the control node is not limited in this application. For example, the control node may be the measurement and control station, the gateway station, or the device in the core network shown in FIG. 1.

The control node may obtain the ephemeris information of the plurality of satellites. A quantity of satellites is not limited in this application. In the following, it is assumed that the plurality of satellites include at least a first satellite and a second satellite. The first satellite and the second satellite may be respectively understood with reference to the satellite 1 and the satellite 2 described above.

The ephemeris information of the plurality of satellites may indicate an ephemeris of each of the plurality of satellites. An ephemeris is a precise location or track table of a celestial body that changes with time, and is a function of time. The ephemeris of the satellite is an expression used to describe a location and a speed of the satellite. For example, the ephemeris of the satellite is used to determine parameters such as time, coordinates, an orientation, and the speed of the satellite based on a mathematical relationship between six orbital parameters of the Kepler's law. Unless otherwise specified, the ephemeris mentioned in this specification refers to an ephemeris of a satellite.

A manner of measuring the ephemeris information is not limited in this application. Optionally, the satellite or the measurement and control station may measure the ephemeris information. A manner in which the control node obtains the ephemeris information is not limited in this application. For example, the control node may directly or indirectly obtain the ephemeris information from the satellite or the measurement and control station through the link shown in FIG. 1. In FIG. 4-1, an example in which the control node obtains ephemeris information of the first satellite from the first satellite and obtains ephemeris information of the second satellite from the second satellite is used.

S402: The control node predicts overlapping information based on the ephemeris information.

After obtaining the ephemeris information of the plurality of satellites, the control node may predict the overlapping information based on the ephemeris information.

The overlapping information may indicate that coverage areas of beams of specific satellites in the plurality of satellites are to overlap, and a time interval in which the overlapping occurs. For example, the overlapping information indicates that a coverage area of a beam (referred to as a first beam) of the first satellite and a coverage area of a beam (referred to as a second beam) of the second satellite overlap in a target time interval.

Optionally, the overlapping information further indicates a location of an overlapping area between the coverage area of the first beam and the coverage area of the second beam. The location may be a location of the overlapping area relative to the coverage area of the first beam, and/or a location of the overlapping area relative to the coverage area of the first beam.

Optionally, the overlapping information further indicates a location of the first satellite in an orbit of the first satellite and/or a location of the second satellite in an orbit of the second satellite when the overlapping occurs. For example, the overlapping information indicates that the first satellite runs in an ascending orbit and the second satellite runs in a descending orbit when the overlapping occurs.

S403: The control node sends a target control signal to a target satellite based on the overlapping information.

For ease of description, in this application, a signal used by the first satellite to transmit data in the target time interval is referred to as a first signal, and a signal used by the second satellite to transmit data in the target time interval is referred to as a second signal.

After obtaining the overlapping information through prediction, the control node may send the target control signal to the target satellite based on the overlapping information. When the target satellite includes the first satellite, the target control signal includes a first control signal sent by the control node to the first satellite. When the target satellite includes the second satellite, the target control signal includes a second control signal sent by the control node to the second satellite. When the target satellite includes the first satellite and the second satellite, the target control signal includes a first control signal sent by the control node to the first satellite and a second control signal sent by the control node to the second satellite. In FIG. 4-1, an example in which the target control signal includes the first control signal and the second control signal is used.

The target control signal indicates the target satellite to adjust a target transmission resource used by the target satellite to transmit data in the target time interval, to reduce interference between the signal (referred to as the first signal) used by the first satellite to transmit data in the target time interval and the signal (referred to as the second signal) used by the second satellite to transmit data in the target time interval.

Optionally, the target satellite includes the first satellite, the target control signal includes the first control signal, and the target transmission resource includes a first transmission resource. Correspondingly, S403 includes S4031.

S4031: The control node sends the first control signal to the first satellite based on the overlapping information.

After obtaining the overlapping information through prediction, the control node may send the first control signal to the first satellite based on the overlapping information. The first control signal indicates the first satellite to adjust the first transmission resource. The first transmission resource is specifically a transmission resource used by the first satellite to transmit data in the target time interval.

Optionally, the first transmission resource includes the coverage area (referred to as a first coverage area) of the first beam in the target time interval.

Optionally, the overlapping information further indicates a location of an overlapping area in the first coverage area, and the overlapping area is an overlapping area between the coverage area of the first beam and the coverage area of the second beam in the target time interval. For example, the overlapping information indicates a relative location of the overlapping area shown in FIG. 2 in the coverage area 1.

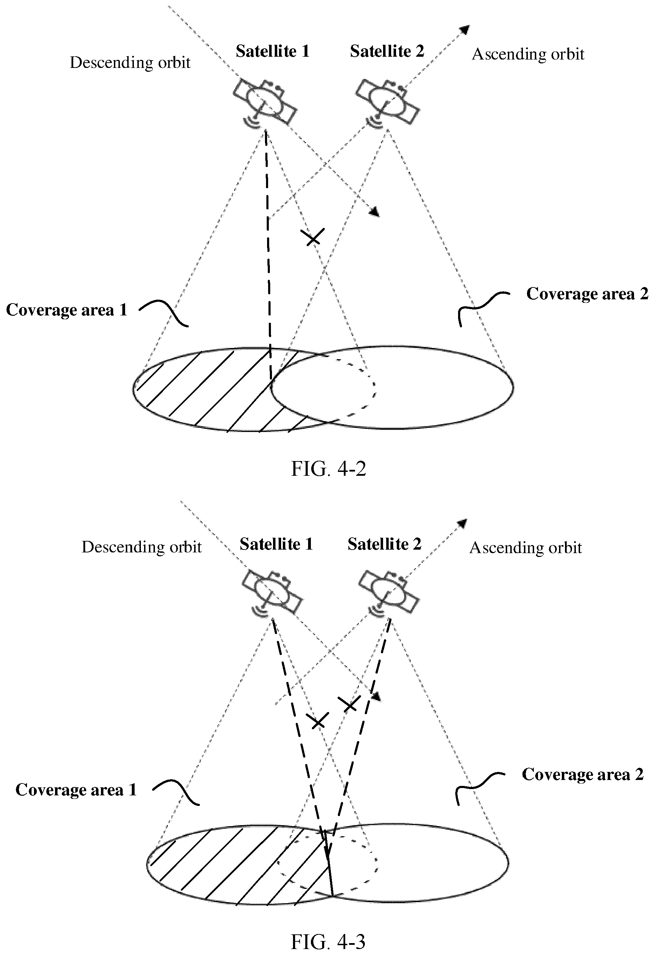

Optionally, the first control signal indicates the first satellite to adjust the first coverage area, to reduce or remove the overlapping area. In other words, an area of an overlapping area between an adjusted first coverage area and the second coverage area becomes smaller, or an adjusted first coverage area and the second coverage area no longer overlap. For example, the first coverage area before the adjustment is the coverage area 1 shown in FIG. 2, and the adjusted first coverage area is a coverage area 1 (a plane area filled with slashes or a three-dimensional area with the plane area as a bottom) shown in FIG. 4-2.

Alternatively, optionally, the first transmission resource includes a time resource (referred to as a first time resource) used by the first beam in the target time interval. The time resource of the first beam may include duration that can be used by the first beam to transmit data in the target time interval.

Optionally, the first control signal indicates the first satellite to adjust the first time resource, so that a time interval in which the first satellite transmits the first signal is different from a time interval in which the second satellite transmits the second signal. For example, the first control signal indicates the first satellite not to transmit the first signal in the target time interval.

Alternatively, optionally, the first transmission resource includes a frequency resource (referred to as a first frequency resource) used by the first beam in the target time interval. The frequency resource of the first beam may include one or more frequencies that are in a spectrum and that can be scheduled by the first beam to transmit data. The plurality of frequencies may be consecutive or discrete.

Optionally, the first control signal indicates the first satellite to adjust the first frequency resource, so that a frequency at which the first satellite transmits the first signal is different from a frequency at which the second satellite transmits the second signal.

For ease of description, in this application, an order in which the first satellite schedules the first frequency resource is referred to as a first order, a frequency resource used by the second beam of the second satellite in the target time interval is referred to as a second frequency resource, and an order in which the second satellite schedules the second frequency resource is referred to as a second order.

It should be noted that the first order is an order of scheduling frequencies or frequency bands in the first frequency resource. Alternatively, the first order is a descending order of priorities of the frequencies or the frequency bands in the first frequency resource. The first satellite first schedules a frequency with a higher priority to transmit data, and then schedules a frequency with a lower priority to transmit data. In this application, the first order is not limited to being consistent with the descending order of the frequencies or the frequency bands in the first frequency resource, or being consistent with an ascending order of the frequencies or the frequency bands in the first frequency resource.

Similarly, the second order indicates an order of scheduling frequencies in the second frequency resource. The second frequency resource is a frequency resource used by the second beam in the target time interval. Alternatively, the second order indicates a descending order of priorities of the frequencies in the second frequency resource. In this application, the first order is not limited to being consistent with the descending order of the frequencies or the frequency bands in the first frequency resource, or being consistent with an ascending order of the frequencies or the frequency bands in the first frequency resource.

Optionally, the first control signal indicates the first satellite to adjust the first order, so that an adjusted first order is different from the second order. For example, it is assumed that both the first frequency resource and the second frequency band resource include a first frequency and a second frequency. Both the first order before the adjustment and the second order indicate that the first frequency is scheduled earlier than the second frequency, and the adjusted first order indicates that the second frequency is scheduled earlier than the first frequency.

In this application, the first order is not limited to indicating a descending order of frequencies, and the second order is not limited to indicating an ascending order of frequencies, or on the contrary, the first order is not limited to indicating an ascending order of frequencies, and the second order is not limited to indicating a descending order of frequencies, provided that compared with the first order before the adjustment, the adjusted first order is more conducive to preventing the first satellite and the second satellite from using a same frequency or frequency band to transmit data in the target time interval.

Alternatively, optionally, the first transmission resource includes at least two types of transmission resources in the first coverage area, the first time resource, and the first frequency resource, and the first control signal indicates the first satellite to separately adjust corresponding transmission resources. Adjusting a plurality of types of transmission resources helps further reduce or even avoid co-channel interference. For example, adjusting the first coverage area (that is, space division avoidance) and adjusting the first order help reduce interference at a coverage edge.

Optionally, after step S4031, the method shown in FIG. 4-1 further includes S4041.

S4041: The first satellite adjusts the first transmission resource based on the first control signal.

After receiving the first control signal, the first satellite may adjust the first transmission resource indicated by the first control signal. A specific manner used by the first satellite to adjust the first transmission resource is not limited in this application.

Optionally, the target satellite includes the second satellite, the target control signal includes the second control signal, and the target transmission resource includes the second transmission resource. Correspondingly, S403 includes S4032.

S4032: The control node sends the second control signal to the second satellite based on the overlapping information.

After obtaining the overlapping information through prediction, the control node may send the second control signal to the second satellite based on the overlapping information. The second control signal indicates the second satellite to adjust a second transmission resource. The second transmission resource is specifically a transmission resource used by the second satellite to transmit data in the target time interval.

For the second control signal and the second transmission resource, refer to content about the first control signal and the first transmission resource in S4031 for understanding, where only "first" needs to be replaced with "second", and "second" needs to be replaced with "first". For example, the second transmission resource includes the coverage area (referred to as the second coverage area) of the second beam in the target time interval, and/or includes a time resource (referred to as a second time resource) used by the second beam in the target time interval, and/or includes a frequency resource (referred to as a second frequency resource) used by the second beam in the target time interval.

Optionally, after step S4032, the method shown in FIG. 4-1 further includes S4042.

S4042: The second satellite adjusts the second transmission resource based on the second control signal.

After receiving the second control signal, the second satellite may adjust the second transmission resource indicated by the second control signal. A specific manner used by the second satellite to adjust the second transmission resource is not limited in this application.

Optionally, the target satellite includes the first satellite and the second satellite, the target control signal includes the first control signal and the second control signal, and the target transmission resource includes the first transmission resource and the second transmission resource. Correspondingly, S403 includes S4033.

S4033: Based on the overlapping information, the control node sends the first control signal to the first satellite, and sends the second control signal to the second satellite.

After obtaining the overlapping information through prediction, based on the overlapping information, the control node may send the first control signal to the first satellite, and send the second control signal to the second satellite.

For content about step S4033, refer to S4031 and S4032 for understanding.

For example, the first control signal indicates the first satellite to adjust the first coverage area, and the second control signal indicates the second satellite to adjust the second coverage area, to reduce or remove the overlapping area. For example, the first coverage area and the second coverage area before the adjustment are respectively the coverage area 1 and the coverage area 2 shown in FIG. 2, an adjusted first coverage area is a coverage area 1 (a plane area filled with slashes or a three-dimensional area with the plane area as a bottom) shown in FIG. 4-3, and an adjusted second coverage area is a coverage area 2 (a plane area not filled with slashes or a three-dimensional area with the plane area as a bottom) shown in FIG. 4-3.

For example, the first control signal indicates the first satellite to adjust the first order, and the second control signal indicates the second satellite to adjust the second order, so that an adjusted first order is different from an adjusted second order.

Optionally, after step S4033, the method shown in FIG. 4-1 further includes S4043.

S4043: The first satellite adjusts the first transmission resource based on the first control signal, and the second satellite adjusts the second transmission resource based on the second control signal.

After determining that the coverage area of the first beam and the coverage area of the second beam are to overlap in the target time interval, the control node may send the target control signal to the target satellite, to indicate the target satellite to adjust the target transmission resource used by the target satellite to transmit data in the target time interval, to reduce or avoid interference between the first signal and the second signal. Because the target satellite only needs to adjust the target transmission resource in the target time interval based on the control signal, interference between the first signal and the second signal can be reduced or even avoided. Therefore, in a time interval other than the target time interval, both the first satellite and the second satellite can fully use the transmission resource to transmit data, which helps improve utilization of the transmission resource by the first satellite and the second satellite.

Optionally, the overlapping information may further indicate that other satellites in the plurality of satellites overlap and a time interval in which the other satellites overlap. The control node may send corresponding control signals to the other satellites. For this process, refer to step S403. Details are not described herein again.

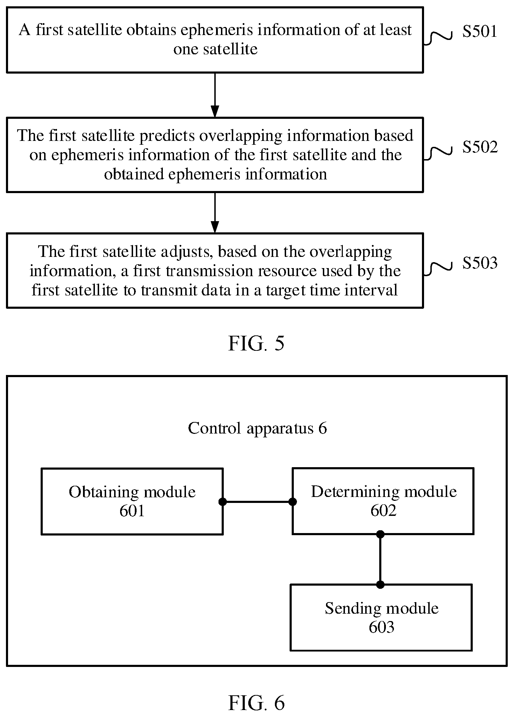

FIG. 5 shows another possible procedure of a communication control method according to this application. Optionally, the method may be applied to the communication system shown in FIG. 1. Refer to FIG. 5. The method includes S501 to S503.

S501: A first satellite obtains ephemeris information of at least one satellite.

The first satellite may obtain ephemeris information of the first satellite, and may further obtain ephemeris information of at least one satellite other than the first satellite. It is assumed that the at least one satellite includes a second satellite. For the ephemeris information of the satellite, refer to related content in S401 for understanding. A manner in which the first satellite obtains ephemeris information of another satellite is not limited in this application. It is assumed that the first satellite and the second satellite are respectively the satellite 1 and the satellite 2 shown in FIG. 1. For example, the satellite 1 may obtain ephemeris information of the satellite 2 through an inter-satellite link between the satellite 1 and the satellite 2, or obtain ephemeris information of the satellite 2 from the measurement and control station through a measurement and control link.

S502: The first satellite predicts overlapping information based on the ephemeris information of the first satellite and the obtained ephemeris information.

After obtaining the ephemeris information of the at least one satellite, the first satellite may predict the overlapping information based on the ephemeris information of the first satellite and the ephemeris information of the at least one satellite. Refer to content corresponding to FIG. 4-1. A beam of the second satellite is referred to as a second beam in this application. The overlapping information indicates that a coverage area of a first beam of the first satellite and a coverage area of the second beam overlap in the target time interval. Content of the overlapping information may be understood with reference to related content in FIG. 4-1, and details are not described herein again.

S503: The first satellite adjusts, based on the overlapping information, a first transmission resource used by the first satellite to transmit data in the target time interval.

After obtaining the overlapping information through prediction, the first satellite may adjust, based on the overlapping information, the first transmission resource used by the first satellite to transmit data in the target time interval, to reduce interference between a signal (referred to as a first signal) used by the first satellite to transmit data in the target time interval and a signal (referred to as a second signal) used by the second satellite to transmit data in the target time interval.

For the first transmission resource, refer to related content in S4031 for understanding. For example, the first transmission resource includes a first coverage area of the first beam in the target time interval, and/or a first time resource used by the first beam in the target time interval, and/or a first frequency resource used by the first beam in the target time interval.

Optionally, the overlapping information further indicates a location of an overlapping area in the first coverage area, and the overlapping area is an overlapping area between the coverage area of the first beam and the coverage area of the second beam in the target time interval. For example, the overlapping information indicates a relative location of the overlapping area shown in FIG. 2 in the coverage area 1.

Optionally, step S503 includes S5031.

S5031: The first satellite adjusts the first coverage area.

After obtaining the overlapping information through prediction, the first satellite may adjust the first coverage area based on the overlapping information, to reduce or remove the overlapping area. In other words, an area of an overlapping area between an adjusted first coverage area and the second coverage area becomes smaller, or an adjusted first coverage area and the second coverage area no longer overlap. For example, the first coverage area before the adjustment is the coverage area 1 shown in FIG. 2, and the adjusted first coverage area is a coverage area 1 (a plane area filled with slashes or a three-dimensional area with the plane area as a bottom) shown in FIG. 4-2.

Optionally, step S503 includes S5032.

S5032: The first satellite adjusts an order of scheduling the first frequency resource.

After obtaining the overlapping information through prediction, the first satellite may adjust an order of scheduling the first frequency resource. An adjusted order is different from an order in which the second satellite schedules the frequency resource. For content about step S5032, refer to related content in S4031. Details are not described herein again.

Optionally, step S503 includes S5033.

S5033: The first satellite adjusts the first time resource.

After obtaining the overlapping information through prediction, the first satellite may adjust the first time resource, so that a time interval in which the first satellite transmits the first signal is different from a time interval in which the second satellite transmits the second signal. For example, a first control signal indicates the first satellite not to transmit the first signal in the target time interval.

Optionally, step S503 includes at least two steps of S5031 to S5033.

After the first satellite determines that the coverage area of the beam of the first satellite is to overlap the second satellite in the target time interval, the first satellite may transmit data in the target time interval through the adjusted first transmission resource, to reduce or avoid interference between the first signal and the second signal. Because the first satellite only needs to adjust the first transmission resource in the target time interval based on the overlapping information, interference between the first signal and the second signal can be reduced or even avoided. Therefore, in a time interval other than the target time interval, the first satellite can fully use the transmission resource to transmit data, which helps improve utilization of the transmission resource by the first satellite.

Optionally, the first satellite and the second satellite in the step shown in FIG. 5 may be exchanged, to obtain a method for adjusting a second transmission resource by the second satellite. Optionally, both the first satellite and the second satellite may adjust the respective transmission resources in the target time interval.

To further reduce interference between the first signal and the second signal after the first satellite and the second satellite separately adjust the transmission resources, optionally, the overlapping information may further indicate information about an overlapping object. For example, the overlapping information predicted by the first satellite may indicate information about the second satellite. The information about the second satellite may include an identifier of the second satellite and/or an orbit of the second satellite or a location of the second satellite in an orbit.

To further reduce interference between the first signal and the second signal after the first satellite and the second satellite separately adjust the transmission resources, optionally, overlapping information predicted by a satellite may further indicate information about the satellite. For example, the overlapping information predicted by the first satellite may indicate information about the first satellite. The information about the first satellite may include an identifier of the first satellite and/or an orbit of the first satellite or a location of the first satellite in an orbit.

To better implement the foregoing solutions of this application, the following further provides a related device configured to implement the foregoing solutions.

FIG. 6 is a diagram of a structure of a control apparatus according to an embodiment of this application. The control apparatus may be the control node described above, or may be deployed on the control node. The control apparatus may perform the method performed by the control node in FIG. 4-1. The control apparatus 6 may include an obtaining module 601, a determining module 602, and a sending module 603. The obtaining module 601 is configured to perform step S401, the determining module 602 is configured to perform step S402, and the sending module 603 is configured to perform detailed steps in step S403 or S403. For a specific implementation, refer to related descriptions of corresponding steps. Details are not described herein again.

The control apparatus may be a hardware circuit, or may be a module existing in a form of software, or may be a module implemented by a hardware circuit in combination with software. Optionally, the control apparatus may be a physical apparatus (for example, a computer device or a server). Alternatively, optionally, the control apparatus may be a virtual apparatus. A deployment location of the virtual apparatus is not limited in this application.

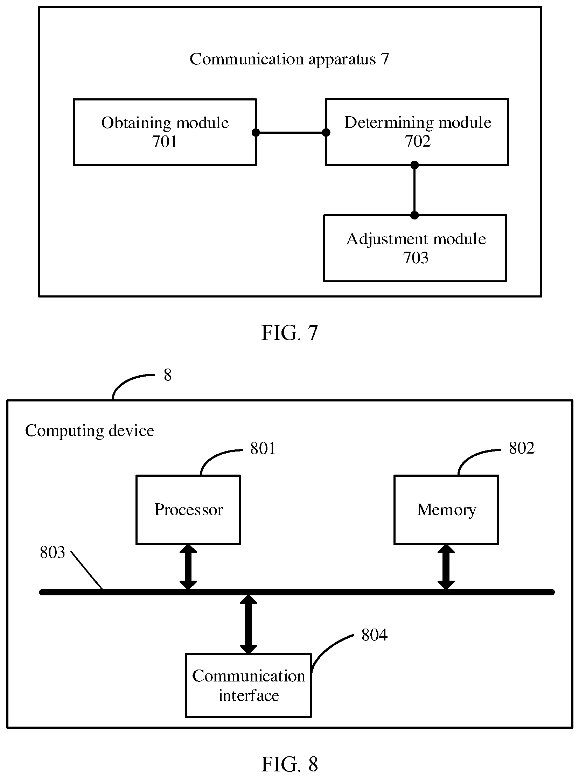

FIG. 7 is a diagram of a structure of a communication apparatus according to an embodiment of this application. The communication apparatus may be the first satellite described above or may be deployed on the first satellite. The communication apparatus may perform the method in FIG. 5. The communication apparatus 7 may include an obtaining module 701, a determining module 702, and an adjustment module 703. The obtaining module 701 is configured to perform step S501, the determining module 702 is configured to perform step S502, and the adjustment module 703 is configured to perform detailed steps in step S503 or S503. For a specific implementation, refer to related descriptions of corresponding steps. Details are not described herein again.

The communication apparatus may be a hardware circuit, or may be a module existing in a form of software, or may be a module implemented by a hardware circuit in combination with software. Optionally, the communication apparatus may be a physical apparatus (for example, a computer device or a server). Alternatively, optionally, the communication apparatus may be a virtual apparatus. A deployment location of the virtual apparatus is not limited in this application.

This application further provides a computing device. FIG. 8 shows a possible structure of the computing device. The computer device may be the control apparatus or the communication apparatus described above. As shown in FIG. 8, the computer device 8 includes a processor 801 and a memory 802. The processor 801 and the memory 802 are interconnected. Optionally, the processor 801 and the memory 802 may be interconnected through an internal bus 803.

The processor 801 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 802 may include a volatile memory (volatile memory), for example, a random access memory (random access memory, RAM). The memory 802 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 802 may further include a combination of the foregoing types.

The bus 803 may be a peripheral component interconnect (peripheral component interconnect, PCI) bus, an extended industry standard architecture (extended industry standard architecture, EISA) bus, or the like.

Optionally, the computer device 8 may include a communication interface 804, and the processor 801 is connected to the communication interface 804. For example, as shown in FIG. 8, the processor 801 is connected to the communication interface 804 through a bus.

The memory 802 stores computer instructions, and the processor 801 may execute the method procedure shown in FIG. 1, FIG. 3, or FIG. 5 by executing the computer instructions. For a specific implementation, refer to the foregoing corresponding content. Details are not described herein again.

The communication control method provided in embodiments of this application may be specifically performed by a chip in the computing device. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the computing device performs the foregoing method example. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

This application further provides a computer-readable storage medium. The computer-readable storage medium stores a computer program. When the computer program is executed by a processor, some or all of the steps recorded in any one of the foregoing method embodiments may be implemented. The computer-readable storage medium may be any available medium accessible to a general-purpose or dedicated computer. An embodiment of this application further provides a computer program. The computer program includes instructions, and when the computer program is executed by a computer, the computer is enabled to perform some or all of the steps in any one of the method embodiments. A person of ordinary skill in the art may understand that the computer-readable storage medium includes any non-transitory (non-transitory) machine-readable medium that can store program code, for example, a USB flash drive, a removable hard disk, a magnetic disk, an optical disc, a RAM, an SSD, or a non-volatile memory (non-volatile memory).

This application further provides a communication system. The communication system may include any two types of devices described above. For example, the communication system includes a first satellite and a terminal, or includes a first satellite and a control node, or includes a first satellite, a second satellite, and a control node. Optionally, the communication system is shown in FIG. 1.

In the specification, claims, and accompanying drawings of this application, terms such as "first" and "second" are intended to distinguish between similar objects, but do not necessarily indicate a specific order or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. In embodiments of this application, the term "a plurality of" means two or more.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit. Finally, it should be noted that the foregoing embodiments are merely intended for describing the technical solutions of this application, rather than limiting this application.

It is clear that a person skilled in the art can make various modifications and variations to this application without departing from the scope of this application. This application is intended to cover these modifications and variations provided that they fall within the scope of protection defined by the following claims.

## Claims

1. A communication control method, comprising:
obtaining, by a control node, ephemeris information of a plurality of satellites;
predicting, by the control node, overlapping information based on the ephemeris information, wherein the overlapping information indicates that a coverage area of a first beam of a first satellite and a coverage area of a second beam of a second satellite are to overlap in a target time interval, and the first satellite and the second satellite are different satellites in the plurality of satellites; and
sending, by the control node, a target control signal to a target satellite based on the overlapping information, wherein the target control signal indicates the target satellite to adjust a target transmission resource used by the target satellite to transmit data in the target time interval, and the target satellite comprises the first satellite and/or the second satellite.

2. The method according to claim 1, wherein the target transmission resource comprises a target coverage area of a target beam in the target time interval, and/or a target time resource used by the target beam in the target time interval, and/or a target frequency resource used by the target beam in the target time interval, and the target beam is a beam of the target satellite.

3. The method according to claim 2, wherein the overlapping information further indicates a location of an overlapping area in the target coverage area, and the overlapping area is an overlapping area between the coverage area of the first beam and the coverage area of the second beam in the target time interval.

4. The method according to claim 3, wherein the target control signal indicates the target satellite to adjust the target coverage area, to reduce or remove the overlapping area.

5. The method according to any one of claims 2 to 4, wherein the target control signal indicates the target satellite to adjust an order in which the target satellite schedules the target frequency resource, so that in the target time interval, an order in which the first satellite schedules a frequency resource of the first satellite is different from an order in which the second satellite schedules a frequency resource of the second satellite.

6. A communication control method, comprising:
obtaining, by a first satellite, ephemeris information of at least one satellite;
predicting, by the first satellite, overlapping information based on ephemeris information of the first satellite and the obtained ephemeris information, wherein the overlapping information indicates that a coverage area of a first beam of the first satellite and a coverage area of a second beam are to overlap in a target time interval, and the second beam is a beam of a second satellite in the at least one satellite; and
adjusting, by the first satellite based on the overlapping information, a first transmission resource used by the first satellite to transmit data in the target time interval.

7. The method according to claim 6, wherein the first transmission resource comprises a first coverage area of the first beam in the target time interval, and/or a first time resource used by the first beam in the target time interval, and/or a first frequency resource used by the first beam in the target time interval.

8. The method according to claim 7, wherein the overlapping information further indicates a location of an overlapping area in the first coverage area, and the overlapping area is an overlapping area between the coverage area of the first beam and the coverage area of the second beam in the target time interval.

9. The method according to claim 8, wherein the adjusting, by the first satellite based on the overlapping information, a target transmission resource used by the first satellite to transmit data in the target time interval comprises:
adjusting, by the first satellite, the first coverage area, to reduce or remove the overlapping area.

10. The method according to any one of claims 6 to 9, wherein the adjusting, by the first satellite based on the overlapping information, a target transmission resource used by the first satellite to transmit data in the target time interval comprises:
adjusting, by the first satellite, an order of scheduling the first frequency resource, wherein an adjusted order is different from an order in which the second satellite schedules a frequency resource of the second satellite.

11. A computing device, comprising a memory and a processor, wherein the memory stores code, the processor is configured to execute the code, and when the code is executed, the computing device performs the method according to any one of claims 1 to 10.

12. A computer storage medium, wherein the computer storage medium stores a computer program, and when the program is executed by a computer, the computer is enabled to implement the method according to any one of claims 1 to 10.

13. A communication apparatus, comprising a unit configured to perform the method according to any one of claims 1 to 10.

14. A computer program product, wherein the computer program product comprises instructions, and when the instructions are run by a processor, the method according to any one of claims 1 to 10 is implemented.

15. A communication system, comprising a first satellite and a control node, wherein the control node is configured to perform the method according to any one of claims 1 to 5, and the first satellite is configured to perform the method according to any one of claims 6 to 10.
